# EUROPEAN PATENT APPLICATION

(11) **EP 2 091 176 A1**
(43) Date of publication of application: **19.08.2009**
(21) Application number: 08250553.8
(22) Date of filing: 18.02.2008
(51) Int. Cl.: H04L 9/08, H04J 3/16

(54) **Data communication**

(71) Applicant: British Telecommunications Public Limited Company, London EC1A 7AJ (GB)
(72) Inventor: The designation of the inventor has not yet been filed
(74) Representative: Williamson, Simeon Paul

(57) **Abstract**

A point to multi-point passive optical network has a head end device 10 and a plurality of remote end devices 31, 32, 33, 34 connected to the head end device 10 via an optical fibre transmission medium 20, 21, 22, 23, 24, 25, wherein any signal transmitted by the head end device is carried by the transmission medium 20, 21, 22, 23, 24, 25, to each of the remote end devices 31, 32, 33, 34, while any signal transmitted by a remote end device 31 is carried by the optical fibre transmission medium 20, 21, 25 only to the head end device 10, and not to any of the other remote end devices 32, 33, 34 under normal operation of the network. Thus, the transmission medium 20, 21, 22, 23, 24, 25, is at least partially 20, 25 shared with the other remote end devices 32, 33, 34. Each remote end device 31, 32, 33, 34 transmits to the head end device 10 a respective data encryption key and the head end device subsequently uses this data encryption key to encrypt data destined for that remote end device before transmitting it over the transmission medium 20, 21, 22, 23, 24, 25. Before sending the data encryption key to the head end device, the remote end device encrypts the data encryption key to prevent malicious eavesdroppers from obtaining the data encryption key.

## Description

### Field of the Invention

The present invention relates to a method of and apparatus for communicating data over a communications network, especially a passive optical network.

### Background to the Invention

One known type of architecture for a broadband access network is known as a Passive Optical Network (PON). This is a one to many type of network in which unpowered optical splitters are used to connect a large number of end-points (e.g. directly to a user's premises or to a point - e.g. a "cabinet" - quite close to a small number of end-users' premises) to a single point at a local exchange or central office where the PON connects to a back-bone network. This generates a branched network configuration in which traffic in the downstream direction (from the local exchange towards the users) is broadcast to all end points and traffic in the up-stream direction is combined using a multi-access protocol such as time-division multiple access. In order to enable data destined for a specific endpoint to be broadcast without devices connected to other of the endpoints being able to eavesdrop on the broadcast communication, encryption is used so that although any device connected to any one of the end-points can receive the communication, only the specific destination device should be able to decrypt the message and thus receive the encrypted data.

A fairly recent development of the PON architecture is known as Gigabyte Passive Optical Network (GPON) and has been standardised by the International Telecommunications Union (ITU) in proposed standard G984.3. In this standard the expected maximum number of end points within a single GPON is 64 although the standard makes provision for up to 128 end points to be provided in anticipation that better optical elements might be developed to enable this amount of splitting to occur. At the time the standard was written typical actual installations were only really expected to be deployed with up to 32 end points.

In the threat model used in justifying the type of security provisions set out in the standard (see G984.3 Section 12.1 - Basic Threat Model) it states that "the PON itself has the unique property in that it is highly directional. So, any ONU cannot observe the upstream traffic from the other ONUs on the PON. This allows privileged information (like the security keys) to be passed upstream in the clear. While there are threats that could jeopardize this situation, such as an attacker tapping the common fibres of the PON, these again are not considered realistic, since the attacker would have to do so in public spaces, and would probably impair the very PON he is tapping."

For this reason, the standard adopts an encryption strategy in which to initiate an encrypted communication, an ONU sends an encryption key in clear text upstream to the OLT which then uses this key within an encryption algorithm (specifically the well known Advanced Encryption Standard (AES)) in order to encrypt communications back from the OLT downstream to the ONU.

### Summary of the Invention

According to a first aspect of the present invention, there is provided a method of transmitting data over a point to multi-point passive optical network having a head end device and a plurality of remote end devices, wherein any signal transmitted by the head end device is carried by the network to each of the remote end devices, while any signal transmitted by a remote end device is carried by the network only to the head end device, under normal operation of the network, over a transmission medium at least partially shared with the other remote end devices, the method including each remote end device transmitting to the head end device a respective data encryption key and the head end device subsequently using this data encryption key to encrypt data subsequently transmitted by the head end device and destined for the respective remote end device which transmitted the respective data encryption key, the method being characterised in that each respective data encryption key sent by a remote end device is firstly encrypted (or encoded or hidden) by the remote end device and subsequently decrypted (or decoded or unhidden) upon receipt by the head end device.

This method ensures that upstream communications are protected from eavesdropping attacks without significantly altering the protocol used to communicate between remote end devices and head end devices compared to a conventional system where no such protection is provided - in particular there is no or very little additional overhead in terms of the messages required to be sent between the devices. The protection against upstream eavesdropping is important because there is much ongoing work to try to increase both the distance that a PON network can cover and the maximum number of splits and therefore remote end-points/end devices. For example, recent proposals for increasing the economical feasibility of introducing Fibre To The Premises (FTTP) access networks provide solutions to enable a PON to have reaches of up to 135KM and/or passive splits enabling up to 1024 end-points (ONU's) to be supported (so-called long range GPON's). In cases, such as these, where there is potentially a very large number of remote end points and hence a large number of end-users served by the network, there is greater potential value to be gained by a malicious user who is able to obtain information which is not destined for him/her and furthermore, with more users served by a single network (and spread out over a larger geographical area) it becomes more difficult to detect malicious behaviour and to track it down to a single user. The present inventors have realised, that because of the above reasons, malicious users (on large PON's serving a large number of end users) are more likely to take the steps necessary to eavesdrop on upstream communications and therefore steps should be taken to avoid risks of unauthorised users from being able to either decrypt information travelling downstream which is intended for another user, or to pass themselves off as another user. The present invention provides such steps.

Subsequent to sending an initial key from a remote end device to the head end device in an encrypted (or encoded or otherwise hidden) manner, subsequent data encryption keys for use in the ongoing encryption of data (especially customer data) destined for the remote end device can be generated and sent either by the remote end device to the head end device or vice-versa, also in an encrypted (or encoded or otherwise hidden) fashion, preferably using a previously used encryption key such that the encryption keys evolve over time.

Preferably, exchange of data is performed largely in accordance with the ITU standard G.984.3 except that key messages send an encrypted (or encoded or otherwise hidden) version of the key rather than sending the key in clear text. Preferably, the head end device corresponds to the (Optical Line Termination) OLT of the standard, whereas the remote end devices correspond to the Optical Network Units (ONU's) / Optical Network Terminations (ONT's).

Preferably, the encryption method used to encrypt customer data sent by the head end device (the OLT) to the remote end device(s) (the ONU's) is a block cipher symmetric encryption algorithm, and most preferably it is the well known Advanced Encryption Standard (AES) algorithm as specified in G.984.3.

Preferably, the encryption method used to encrypt the data encryption key (i.e. the key to be used in subsequent AES encryption) is a symmetric encryption algorithm, and most preferably the shared encryption key which is used for the encryption is generated using a function which is generally straightforward to calculate (in a "forward" direction) but difficult to invert (i.e. to calculate the input used to generate a particular output) - such functions are generally referred to as "one-way functions". The input to this function preferably includes a shared secret which is shared between the OLT and the ONU. Preferably this shared secret takes the form of a relatively short numeric or alphanumeric code (e.g. a 6 digit or 6 character code or 16 pairs of hexadecimal numbers - hereinafter referred to as a PIN). By using a "one-way function" to calculate the shared key (for use in encrypting the AES session key), even if a malicious eavesdropper guesses the key used to encrypt the data key, they will not easily be able to derive the shared secret.

The advantage of using a symmetric encryption algorithm (i.e. one in which the same key is used to perform both encryption and decryption) is that it places much less processing and memory burdens on the remote and head end devices compared to use of an asymmetric encryption algorithm. In particular, it is possible to employ techniques which are already well studied and tested in "Bluetooth" enabled devices - such techniques have very efficient implementations available since they have been designed from the outset to be applicable to relatively simple often battery operated handheld devices and accessories etc. with low processing power and memory etc.

Preferably, the data encryption key is "evolved" over time as set out in G.984.3, by periodically having the ONU generate a new data encryption key and send this to the OLT. Furthermore, as mentioned above, it is preferred if the key used to encrypt the data encryption key itself "evolves" over time. The "evolved" key could be "evolved" from the previous key either by having one of the head end or remote end devices randomly (or pseudo-randomly) generate a completely new key and sending this encrypted using the previous key; alternatively, a new key (hereinafter the evolved keys used to encrypt data encryption keys may be referred to as session keys to distinguish them from the data keys
- which, as mentioned above, may also evolve over time) may be evolved from the old (session) key using a one way function common to both devices and using the previous (session) key as at least one of the inputs to the one-way function.

Preferably, the PIN is supplied by a telecommunications service provider to its customer who is responsible for paying for the access network connection, and this PIN is securely communicated to the head end device in association with the customer's account details and, if known, the serial number of the customer's remote end device. Furthermore, the PIN is then securely entered into the remote end device of the customer, by the customer. If the serial number of the customer's remote end device is not prior known to the service provider, then, at the time of wishing to connect the remote end device to the access network, the customer contacts the service provider to provide the serial number of the remote end device and this is provided to the head end device so that it knows the serial number of the remote end device associated with the particular PIN for that device.

Further aspects of the present invention relate to: a remote end device operable to encrypt a data encryption key and to send the encrypted data encryption key to a head end device over a point to multi-point passive optical network; a head end device operable to receive an encrypted data encryption key from a remote end device over a point to multi-point passive optical network, to decrypt this to generate the data encryption key and to send subsequent data to the remote end device encrypted using the data encryption key; and a telecommunications system comprising a head end device and one or more remote end devices connected by a point to multipoint passive optical network in which a remote end device transmits a data encryption key to the head end device in an encrypted form.

Further aspects of the present invention relate to a computer program or suite of computer programs for carrying out the methods of the present invention during execution of the program or programs and to carrier means, preferably tangible carrier means such as a magnetic or optical disk, a non-volatile solid-state memory, carrying a program or programs according to the present invention.

### Brief Description of the Drawings

In order that the present invention may be better understood, embodiments thereof will now be described, by way of example only, with reference to the accompanying drawings in which:
Figure 1 is a schematic block diagram of a passive optical access network including an Optical Line Terminal (OLT) forming a head end device and a plurality of Optical Network Units (ONU's) forming remote end devices interconnected by a passive optical network;
Figure 2 is a signal flow diagram illustrating in overview the signals transmitted between one of the ONU's and the OLT in accordance with an embodiment of the present invention;
Figure 3 is a schematic block diagram of an OLT according to the first embodiment of the present invention; and
Figure 4 is a schematic block diagram of an ONU according to the first embodiment of the present invention.

### Specific Description of a First Embodiment

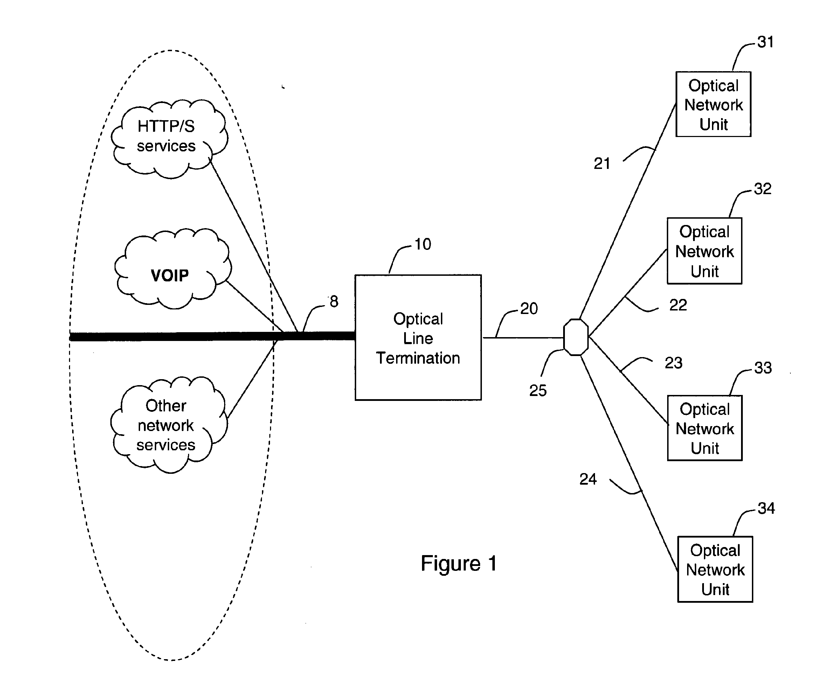

In order to clearly describe the first embodiment, there is set out below a description in overview of a passive optical network (which applies equally to the present embodiment and to conventional arrangements) with reference to Figure 1. Beneath the architectural overview, there is described the conventional operation of the network, with especial reference to the activation procedure for a new ONU. This is followed by a brief discussion of the possible security threats inherent in the conventional operation. The specific description of the first embodiment then concludes with a description of the operation of the network of the present embodiment, highlighting the differences from the conventional mode of operation.

### Architectural Overview of a Passive Optical Network

Figure 1 schematically illustrates a Passive Optical Network (PON) comprising an Optical Line Terminal (OLT) 10, a plurality of Optical Network Units (ONU's) 31-34 and an interconnecting set of optical fibre connections 20-24 which are branched using (at least) one passive splitter 25. The passive splitter 25 operates such that downstream signals (i.e. from the OLT towards the ONU's) on the upstream connection 20 are split and pass along all downstream connections 21-24 towards all ONU's 31-34, but signals travelling in the upstream direction (e.g. on connection 24 from ONU 34) are not split and pass substantially unaltered only along the upstream connection 20 towards the OLT without being carried onto the other downstream connections 21-23. On the upstream side of the OLT 10, the OLT is connected to a back-bone network (e.g. an Optical Transmission Network) from which many network services (e.g. services delivered over Internet Protocol - i.e. HTTP (and HTTPS) web-browsing, etc., Voice over IP services, etc.) may be provided (this connection to a back-bone network is illustrated by the connection 8 shown in Figure 1). All of these services are able to be provided to end users connected on the downstream side of the ONU's 31-34.

### Conventional Activation Procedure

The conventional activation procedure for activating a new ONU (i.e. when a new ONU is plugged into the network) or for re-establishing an ONU which is already plugged into the network but which has suffered some sort of loss of signal problem, etc. is fully documented in G.984.3 Section 10. An overview of the activation procedure is given in G.984.3 thus:
"The outline of the activation procedure is:
   - The ONU adjusts the transmission optical power level based on OLT requirement.
   - The OLT discovers the Serial Number of a new connected ONU.
   - The OLT assigns an ONU-ID to the ONU.
   - The OLT measures the arrival phase of the upstream transmission from the ONU.
   - The OLT notifies the ONU of the equalization_delay.
   - The ONU adjusts the transmission phase to the notified value.

This procedure is performed by the exchange of upstream and downstream flags and PLOAM messages.

In the normal operating state, all transmissions can be used for monitoring the phase of the arriving transmission. Based on monitoring transmission phase information, the equalization_delay can be updated."

As part of this procedure, the ONU passes through several different states until it reaches the operation state (state 6). The different (main) states through which the ONU progresses during the activation procedure in order to reach the operation state are an initial state (state 1), a standby state (state 2), a power setup state (state 3), a serial number state (state 4) and a ranging state (state 5). In the serial number state (state 5) the OLT discovers the serial number of the ONU and assigns it an ONU ID which is subsequently used by the OLT to address the particular ONU.

The G.984.3 standard encompasses several different possibilities for how the serial number of the ONU may be discovered by the OLT. A first possibility is for the OLT to instruct the ONU to move to the serial number state, await receipt of a general serial number request and thereafter simply wait a random amount of time (within certain limits) and then transmit the serial number to the OLT. A second possibility is for the OLT to instruct the ONU to move to the serial number state and await receipt of a serial number mask message which includes a variable amount of the least significant bits of a serial number (together with an indication of which bits they are - i.e. it might specify "serial number ending 00110101 or serial number ending 01, etc.). If the mask message matches the ONU's serial number it then moves to a state where it awaits receipt of, and responds to, a general serial number request as in the above-described first possibility.

In the second possibility, naturally, the OLT generally has some information about the serial number of (at least one of) the activating ONU('s) (since it generally inserts at least a part of this in the mask message); the OLT could have this serial number information about a particular ONU either because it is a new ONU whose serial number has been pre-registered with the network operator or because the OLT is looking to re-establish a connection with an ONU with which the OLT has somehow lost contact. Note that it is possible for a malicious user to read the mask message and, if the mask message contains all of the serial number of an ONU, to thereafter attempt to imitate this ONU by responding at the appropriate time with a serial number message corresponding to the learnt serial number (rather than its own actual serial number). This is discussed a little more below.

After sending its serial number to the OLT, the OLT responds with a message which specifies an 8 bit ONU-ID (ONU identifier). Note this allows up to 256 different ONU's to be identified in theory, though in fact according to the standard only the 254 values between 0 and 253 are able to be used with the all 1's value (0xFF = 11111111 in binary) being used as a broadcast to all ONU's identifier and 0xFE being reserved for future use. This only enables a maximum of 253 devices without implementing a change in the standard to accommodate a larger range of ONU-ID's.

Once the ONU has received an ONU-ID, it moves to the ranging state (state 5) in which the OLT calculates an appropriate delay to be used by the ONU in order to avoid upstream signals from overlapping with one another when they are received at the OLT. Upon completion of the ranging process the OLT informs the ONU of the equalisation delay to use and then the ONU moves to the operation state (state 6), where normal operation commences.

Note that there is an option within the standard for the OLT to request that the ONU sends a password to the OLT. The password is a shared secret between the OLT and the ONU and is associated with a particular ONU by reference to the serial number of the ONU and which can therefore be used to provide a level of authentication (i.e. to authenticate the ONU as being the ONU which it alleges to be). If an ONU receives a password request from the OLT it responds (if it knows the correct password) with its password which is transmitted to the OLT in clear text. Note that the password mechanism is not commonly employed in PON's.

### Shared Secret - the PIN

In the present embodiment, each ONU is associated with a shared secret (hereinafter referred to as a PIN) which is known only to the ONU and the OLT (and the ONU's user and the OLT's administrator etc. but is not in general known by other ONU's, nor (unlike the case with the password according to the G.984.3 standard) is it transmitted between the OLT and ONU over the network, so it should be difficult for a third party to determine this PIN). In the present embodiment, this PIN is selected (e.g. by randomly generating it) by the network operator and is assigned by the network operator to a particular ONU. The PIN is provided to the ONU by the network operator communicating the PIN to the network operator's customer who owns the ONU, preferably via some channel other than the optical network (e.g. over the telephone or by a letter or email etc.); and the ONU user enters this PIN into the ONU e.g. as part of a set up procedure for setting up the ONU at the user's home or office, etc.

In the present embodiment, the network operator also provides the information about the PIN to the respective OLT 10, together with information identifying the user (or rather the particular customer account associated with the ONU 31). In the case where the ONU is supplied by the network operator to the customer, the serial number of the ONU 31 is also supplied to the OLT so that the PIN is associated at the OLT with a particular ONU unit by virtue of the ONU's serial number. In the case where the ONU is not provided by the network operator, for example because the customer has purchased an ONU privately from a third party supplier of ONU's, then the customer can contact the network operator and inform the network operator of the serial number of the ONU which he/she is planning to use for accessing service over the optical access network. In general, ONU devices are sold with an indication of the ONU's serial number (either printed on associated paperwork supplied with the ONU or printed directly on the ONU or on a label affixed to the ONU or some combination of these - additionally, should the user manage to loose this printed record, it is typically possible for the user to connect the ONU to his/her computer (e.g. via an Ethernet cable) and query the ONU via its user interface to identify the ONU's serial number); having received the serial number of the ONU from the customer, the network operator can then inform the OLT of the corresponding serial number, which it can match to the correct ONU by virtue of the associated customer account details.

### Figure 2

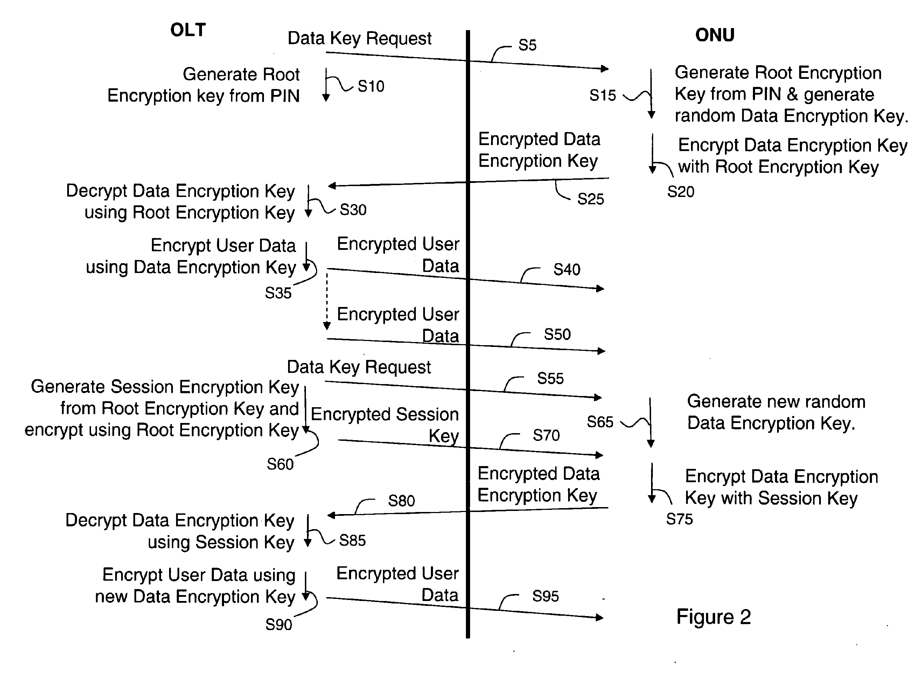

Figure 2 is a schematic illustration of the signals which pass between the OLT 10 and an ONU (e.g.31) when operating in accordance with an embodiment of the present invention in order to encrypt the data passed over the network so as to prevent the data from being obtained by unauthorised eavesdroppers or other malicious users of the network. Of course, many more signal exchanges occur between the OLT 10 and ONU 31 than are explicitly illustrated in Figure 2, however these additional signals have been omitted from the figure for the sake of clarity. In general, unless illustrated and described below explicitly as being different, it can be assumed that the signals exchanged between the ONU and OLT accord to the protocol set out in standard G.984.3.

### ONU Serial Number

One important point to note is that this sequence of signals commences somewhat after the ONU has first been "plugged into" the network. In particular, this method in the present embodiment commences immediately upon the ONU entering the operation state (state 6). Of significant note for the purposes of the present invention is that this is after the sending of the serial number of the ONU. This serial number is difficult for a malicious user to spoof since ONU vendors will generally put in place a physical security mechanism to prevent a user from changing the serial number of the ONU and so a software interception mechanism of some sort will need to be developed by the malicious user and the ONU vendor may implement features within the ONU to make even this difficult or at least difficult to be done in a way which is not easily detectable.

The significance of the serial number is that this is a key identifier of the ONU and therefore important for authenticating the ONU as a legitimate ONU belonging to a particular user (i.e. of being associated with a particular customer account). In the preferred embodiment it is desirable to avoid as much as possible the possibility for malicious users to imitate other ONU's in order to obtain the benefit of the use of the network at another user's expense, and this is achieved by ensuring that the serial number of the ONU to be used in respect of a particular customer account is known in advance by the network operator (and hence also by the OLT). As mentioned above this is already known by the network operator where the ONU is supplied to the customer by the network operator, or otherwise it is a requirement in the present embodiment that the serial number be supplied by the customer to the operator preferably before the user should attempt to plug the ONU into the network. Furthermore, in the present embodiment, the mechanism described above in which the OLT does not send a mask containing part of the serial number of the ONU being activated, but rather it just sends a general request to all ONU's in the serial number state (state 4) to send their serial number. In this way, even in the case that a malicious user is managing to intercept upstream traffic from a newly plugged in ONU to the OLT, the first opportunity that the malicious user has of learning the serial number of another valid ONU on the system will be when the legitimate ONU transmits it to the OLT as part of the activation process - it would be difficult for a malicious user to attempt to impersonate the new ONU at this stage with any success even without the further security measures associated with the present embodiment - with the added security of a shared PIN, this would be almost impossible for a malicious user to achieve.

Immediately after sending the serial number to the OLT, the ONU is ranged by the OLT and after this it will be especially difficult for a malicious user to impersonate a new ONU since if it is situated in a different physical location it is unlikely to require the same equalisation delay as the legitimate ONU.

### Signal Exchanges and Encryption Details

Referring again now to Figure 2, from the perspective of the present invention, the first signal of significance is a data Request_Key signal S5 sent from the OLT 10 to the ONU 31. This signal is a conventional signal in accordance with the G.984.3 standard described at section 9.2.1 - Message number 13.

After sending the Request_Key signal S5, the OLT 10 generates a root encryption key using the PIN as a seed at step S10; the ONU also generates the same root encryption key using the same algorithm and the same PIN as part of step S15 (carried out in the present embodiment after receipt of the Request_Key signal S5). Also as part of step S15, the ONU generates a random, 128 bit Data Encryption Key; the generation of the Data Encryption Key is done in the conventional manner in which such keys are generated in a conventional PON/GPON system i.e. using a suitable pseudo-random number generator, arranged to generate a pseudo-random number of the requisite length (i.e. 128 bits in the present embodiment).

In order to generate the Root Encryption Key, in the present embodiment, the E₂₂ algorithm described in the Bluetooth Specification Version 2.1 + EDR document published by Bluetooth SIG Inc. is used. This function generates a 128 bit number based on two input 128 bit numbers. In the Bluetooth specification, one of these numbers is a random number which is generated by one of the devices and then transmitted (in the clear) to the other device and the other is a PIN number which (if the actual PIN is less than 128 bits in length, is made up to 128 bits in length by concatenating the PIN with the least significant bits of one of the Bluetooth device addresses of the devices which are communicating). In the present embodiment a 128 bit PIN is used (expressed as 16 pairs of Hex numbers) but in alternative embodiments a shorter PIN could be used and could be combined with the serial number of the ONU in an analogous manner to the way in which the 48 bit BD_ADDR address is used in the Bluetooth specification. In the present embodiment, instead of transmitting a random number as the other input to the E₂₂ algorithm, as is done in the Bluetooth standard, the 64 serial number is again used (expanded, in the present embodiment, by adding 64 zeroes at the front of the serial number to generate 128 bits - other embodiments could of course expand the serial number in other agreed ways - e.g. concatenating the number together twice, etc.). In alternative embodiments, either one of the OLT or ONU could generate a random number for this purpose and transmit this to the other device, however this would require the transmission of additional signals (compared to those described in G 984.3) and would therefore require a more fundamental change in the protocol governing OLT/ONU interactions.

Once the ONU has completed step S15, it performs step S20 in which the Data Encryption Key is encrypted using the Root Encryption Key. In the present embodiment, this is performed simply by eXclusive-OR-ing (XOR-ing) these two numbers together - however, more complex algorithms could be employed along the lines of the encryption performed by Bluetooth devices according to the Bluetooth Specification Version 2.1 + EDR.

Upon completion of step S20, the ONU at step S25 transmits the encrypted Data Encryption Key to the OLT which, at step S30, recovers the actual Data Encryption Key using the Root Encryption Key which it generated at step S10 (in the present embodiment, this is achieved simply by again XOR-ing the encrypted Data Encryption Key with the Root Encryption Key. At this point both the OLT and the ONU know the Data Encryption Key to be used for subsequent data encryption and the method proceeds in accordance with the normal GPON protocol specified in G.984.3. This is illustrated in Figure two with steps S35, S40 and S50 showing the OLT encrypting the user data and then transmitting it to the ONU in encrypted form. In particular, as set out in G.984.3 the devices need to agree a start time at which the encryption will start so that they synchronise the generation and application of the cipher code stream to the data stream.

At some point in time after data encryption has been commenced, the OLT can decide to update the key used for encryption - the frequency with which this is done can be determined by the network operator in dependence upon the perceived threat to the secrecy of the key being used (e.g. once per hour, per day or per week, etc.). When the OLT wishes to switch to a new key for encryption purposes, then, in the present embodiment, at step S55 the OLT sends a conventional Key_Request message to the ONU and then, at step S60, it (the OLT) generates a new Session Encryption Key (which, in the present embodiment is a new pseudo random 128 bit number) encrypts this using the old Root Encryption Key and transmits this at step S70 to the ONU. In the meantime, the ONU upon receipt of the Key_Request message generates at step S65 a new Data Encryption Key in the normal way and, upon recovery of the new Session Encryption Key from the OLT (by decrypting the encrypted version of this (received at step S70) using the Root Encryption Key) uses this to encrypt the new Data Encryption Key (at step S75) which is then sent to the OLT at step S80 in a conventional Encryption Key message (except that the key contained in the message is in fact encrypted).

Once the encrypted Data Encryption Key has been received in full by the OLT it decrypts it (at step S80) using the new Session Key and then in due course switches to using the new Data Encryption Key for continued transmission of data to the ONU (illustrated as step S90 - "Encrypt user data using new Data Encryption Key" - and step S95 "transmit encrypted user data").

Steps S55 to S95 can then be repeated indefinitely except that a new session key is subsequently encrypted for transmission to the ONU with the previous Session key, rather than the Root key. The current session key is always stored (in place of the root key, or the root key itself until a session key has been generated) at both the ONU and the OLT and can be used for transmitting a new data encryption key either during part of an ongoing connection, or to establish a new connection should some sort of failure occur.

Note that in the above, it is not explicitly stated how the encrypted new session encryption key is transmitted to the ONU. There are a few possibilities for this. In the present embodiment, this is achieved by transmitting two somewhat modified Key Request messages. According to the standard, the Key Request messages contain 10 unused bytes. In the present embodiment, these currently unused bytes are used to transmit the encrypted Session Key in two consecutive messages. In particular, in the present embodiment, the first 8 normally unused bytes (byte numbers 3-10) contain 8 bytes of the encrypted key and the last two bytes indicate the fragment number (i.e. the first half of the key is sent in a first fragment and the second half is sent in a second fragment).

As an alternative, only a part of the key could be changed (e.g. the last 6 bytes of the old session key could become the first 6 bytes of the new session key and a single key request message could be sent containing the new last 10 bytes of the new session key (encrypted with the last 10 bytes of the previous session key).

As a further alternative for how the session key could be evolved, it would be possible to use a one way function such as the E₂₂ function with the root key or old session key forming an input to the one way function. Provided that there is communication between the OLT and ONU to synchronise when this occurs (e.g. each time the OLT sends a key request message the session key is updated), then no extraneous communications are required between the OLT and ONU.

As a further alternative, the ONU could be responsible for generating new session keys and sending these to the OLT. a suitable protocol for coordinating this would be that each time an OLT sends a Key_Request message, the first response from the ONU is with the new Sesion key (encrypted with the old session key or the old data key or the root key etc.). Then upon successful receipt of this, the OLT sends a second Key_Request message which the ONU responds to by sending the new Data Encryption Key encrypted with the new Session Key.

### Schematic Overview of OLT 10

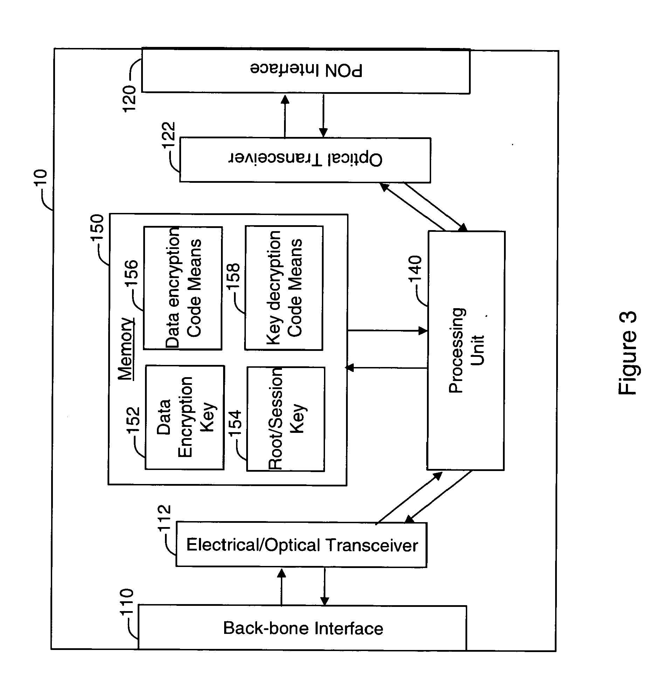

Figure 3 shows a schematic overview of the OLT 10 (the head-end device). As shown, it includes a backbone interface 110 by which it interfaces to the Backbone network to which the PON is connected. Connected to the backbone interface 110 is an electrical/optical transceiver 112 by which electrical/optical signals are transmitted to and received from the interface 110 (the upstream interface can be to an electrical transmission medium - e.g. a copper cable Ethernet connection or to a fibre optic connection). The electrical/optical transceiver 112 is connected to a processing unit 140 which performs all of the processing operations carried out by the OLT 10. Also connected to the processing unit 140 is an optical transceiver 122 which in turn is connected to the PON interface 120. The optical transceiver transmits optical signals to the PON interface 120 and receives optical signals from the PON interface 120. The PON interface is connected to the shared fibre 20 of the PON.

The processing unit 140 is also connected to a memory 150. Amongst other things, the memory 150 includes a storage portion 152 for storing a data encryption key in respect of each of the connected ONU's and a storage portion 154 for storing a current root or session key in respect of each connected ONU for use in decrypting any new data encryption keys sent upstream by the respective ONU. The memory 150 also includes a storage portion 156 storing Data Encryption Code means for controlling the processor to perform encryption of data to be sent downstream to a particular ONU using the respective data encryption key stored in respect of the respective ONU. The memory also includes a storage portion 158 storing key decryption code means for controlling the processor to perform decryption of a new data encryption key sent (in encrypted form) from a respective ONU using the current respective root/session key for that ONU stored in the root/session key storage portion 154.

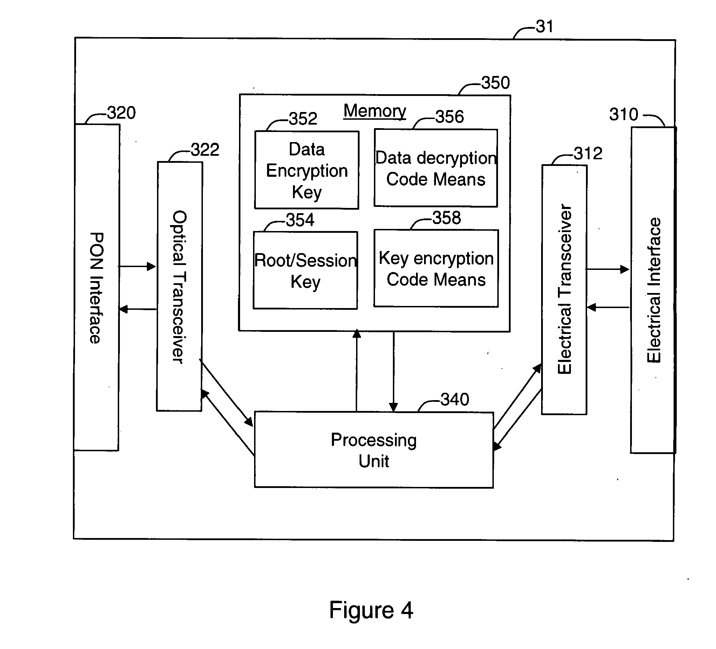

Figure 4 shows a schematic overview of the ONU 31 (a remote-end device). As shown, it includes an electrical interface 310 by which it interfaces to any electrical devices connected to the ONU; for example, the interface 310 may include an 8pin socket for receiving an Ethernet cable (i.e. the so-called "RJ45" socket) for subsequent connection to a PC or a router, etc. Connected to the electrical interface 310 is an electrical transceiver 312 by which electrical signals are transmitted to and received from the interface 310. The electrical transceiver is connected to a processing unit 340 which performs all of the processing operations carried out by the ONU 31. Also connected to the processing unit 340 is an optical transceiver 322 which in turn is connected to the PON interface 320. The optical transceiver transmits optical signals to the PON interface 120 and receives optical signals from the PON interface 120. The PON interface is connected to the unshared downstream fibre 22 of the PON.

The processing unit 340 is also connected to a memory 350. Amongst other things, the memory 350 includes a storage portion 352 for storing a data encryption key (for use in decrypting encrypted data sent downstream to ONU 31 from the OLT 10) and a storage portion 354 for storing a current root or session key for use in encrypting any new data encryption keys sent upstream by the ONU 31 to the OLT 10. The memory 350 also includes a storage portion 356 storing data decryption code means for controlling the processor to perform decryption of data sent downstream to the ONU 31 from the OLT using the data encryption key stored in the data encryption key storage portion 352. The memory also includes a storage portion 358 storing key encryption code means for controlling the processor 340 to perform encryption of a new data encryption key sent (in encrypted form) from the ONU 31 using the current respective root/session key stored in the root/session key storage portion 354.

### Variations

A more fundamental variation to the first embodiment would be to use an asymmetric encryption method in place of using the PIN for generating an initial Root Key for encrypting the Data encryption Key. In such a variant it is preferable for the OLT to have sufficient resource for performing asymmetric decryption. In such a case, the OLT has a public key which is preferably pre-stored in the ONU or otherwise entered by the user to the ONU before connection to the network etc. Then, when the ONU wants to send a Data Key to the OLT it encrypts it using the Public key of the OLT. Even if an eavesdropper intercepts this key they cannot decrypt it without knowledge of the OLT's private key which must therefore be kept secure. If the private key becomes known, then there must be a mechanism for changing this. This would best be achieved using a protocol completely outside the standard control channel between the OLT and the ONU's - e.g. by sending an email to the users that they must go and obtain the new Public key from a trusted third party web-site etc.

## Claims

1. A method of transmitting data over a point to multi-point passive optical network having a head end device and a plurality of remote end devices, wherein any signal transmitted by the head end device is carried by the network to each of the remote end devices, while any signal transmitted by a remote end device is carried by the network only to the head end device, under normal operation of the network, over a transmission medium at least partially shared with the other remote end devices, the method including each remote end device transmitting to the head end device a respective data encryption key and the head end device subsequently using this data encryption key to encrypt data subsequently transmitted by the head end device and destined for the respective remote end device which transmitted the respective data encryption key, the method being **characterised in that** each respective data encryption key sent by a remote end device is firstly encrypted by the remote end device and subsequently decrypted upon receipt by the head end device.

2. A method according to claim 1 wherein the data encryption key is encrypted and decrypted using the same encryption key.

3. A method according to claim 2 in which the key used to encrypt and decrypt the data encryption key is derived from a shared secret which is entered into both the head end device and the remote end device without communicating this over the passive optical network.

4. A method according to claim 3 wherein the key used to encrypt the data encryption key is derived from the shared secret using a one way function.

5. A head end device for use in a point to multi-point passive optical network having a head end device and a plurality of remote end devices connected to the head end device via an optical fibre transmission medium, wherein any signal transmitted by the head end device is carried by the optical fibre transmission medium to each of the remote end devices, while any signal transmitted by a remote end device is carried by the optical fibre transmission medium only to the head end device, under normal operation of the network, over the optical fibre transmission medium which is at least partially shared with the other remote end devices, the head end device comprising data encryption key receiving means for receiving and storing a data encryption key from a remote end device for use in subsequently encrypting data destined for that remote end device, encryption means for encrypting data destined for each respective remote end device with the respective data encryption key for that device, the head-end device being **characterised in that** the data encryption key receiving means is operable to receive the data encryption key in an encrypted form and **in that** it further comprises key decryption means for decrypting the received encrypted data encryption key.

6. A remote end device for use in a point to multi-point passive optical network having a head end device and a plurality of remote end devices connected to the head end device via an optical fibre transmission medium, wherein any signal transmitted by the head end device is carried by the optical fibre transmission medium to each of the remote end devices, while any signal transmitted by a remote end device is carried by the optical fibre transmission medium only to the head end device, and not to any of the other remote end devices under normal operation of the network, over the optical fibre transmission medium which is at least partially shared with the other remote end devices, the remote end device comprising data encryption key transmitting means for storing and transmitting a data encryption key to the head end device for subsequent use by the head end device in encrypting data destined for the remote end device, decryption means for decrypting, using the data encryption key, data received by the remote end device which has been encrypted by the head end device, the remote end device being **characterised in that** it further comprises key encryption means for encrypting the data encryption key prior to transmitting it to the head end device.

7. A passive optical network comprising a head end device according to claim 5, a plurality of remote end devices according to claim 6 and an optical fibre transmission medium connecting each remote end device to the head end device such that any signal transmitted by the head end device is carried by the optical fibre transmission medium to each of the remote end devices, while any signal transmitted by a remote end device is carried by the optical fibre transmission medium only to the head end device, and not to any of the other remote end devices under normal operation of the network, over the optical fibre transmission medium which is at least partially shared with the other remote end devices.

8. Carrier means carrying a computer program or a suite of programs for carrying out the method of any one of claims 1 to 4 during execution of the program or programs.
